## Europäisches Patentamt
## European Patent Office
## Office européen des brevets

(19)

(11) Publication number: **0 024 631**
**A1**

(12) **EUROPEAN PATENT APPLICATION**

(21) Application number: **80104773.9**

(22) Date of filing: **12.08.80**

(51) Int. Cl.³: **H 01 B 7/28**
**H 01 B 9/00, H 01 B 11/00**

(30) Priority: **13.08.79 US 66108**

(43) Date of publication of application:
**11.03.81 Bulletin 81/10**

(84) Designated Contracting States:
**BE DE FR GB IT NL**

(71) Applicant: **THE DOW CHEMICAL COMPANY**
**2030 Abbott Road Post Office Box 1967**
**Midland, Michigan 48640(US)**

(72) Inventor: **Bow, Kenneth Earl**
**443 Mainsail Drive**
**Westerville Michigan(US)**

(74) Representative: **Weickmann, Heinrich, Dipl.-Ing**
**Patentanwälte Dipl.Ing.H.Weickmann et al,**
**Dipl.Phys.Dr.K.Fincke Dipl.Ing.F.A.Weickmann**
**Dipl.Chem.B.Huber, Dr.-Ing.H.Liska Möhlstrasse 22**
**D-8000 München 86(DE)**

(54) **Electric cable with improved water-block.**

(57) An improved cable adapted for use in supplying electrical power and communications and protected against the entry and migration of water. The cable comprises a core of at least one insulated conductor, a metallic shielding tape surrounding the core and an outer jacket surrounding the shielding tape. The cable is particularly characterized by the presence of an absorbent, polymeric film in the interstice between the core and jacket wrapped about the core. The film is made from a cross-linkable aqueous solution comprising a polyelectrolyte and at least 0.1 percent by weight based on the polyelectrolyte of a cross-linking agent reactive with carboxylate groups and is swellable when wetted with water. In the event of rupture of the outer jacket, the film will swell and block the flow of water axially, circumferentially and longitudinally. The thickness of the film is correlated with the swelling characteristic thereof to fill the interstice.

Fig. 1

CABLE WITH IMPROVED WATER-BLOCK

This invention relates to a cable adapted for use in supplying electrical power and communications. More particularly, it relates to a cable protected against the entry and migration of water.

In the art of designing and constructing electrical cables, especially telecommunication cables such as telephone cables, it is known to assemble insulated conductors in a core and surround it by shield and jacket components. A well known telephone cable design of such construction is referred to in the art as "Alpeth" cable. Such cable is described more fully in the F. W. Horn and R. B. Ramsey paper "Bell System Cable Sheaths Problems and Designs" in A.I.E.E. Proceedings, 1951, Volume 70. The shielding tape of "Alpeth" cable is bare aluminum having a thickness of about 8 mils which is usually corrugated transversely prior to being wrapped about the cable core. The corrugation imparts greater flexibility to the cable and permits bending of the cable without wrinkling or rupture of the shielding tape.

The term "shield or shielding tape" as used herein means a relatively thin layer of any metal, bare or coated, which can provide mechanical protection

and electrostatic and electromagnetic screening for the conductors in the core of electrical power and communication cables. The term is also referred to in the art as metallic strip, metallic foil, metallic screen, metallic barrier, metallic sheath, metallic tape, metallic foil-plastic laminate, protective sheath, shielding material, i.e., which terms are often used interchangeably.

When telephone cables are installed underground by being buried directly in soil, the outer polyethylene jacket of such cables may be subjected to damage during installation, by rocks, rodents, lightning, frost or dig-ins. The underlying shielding tapes can thereby be exposed to soil or ground water with an attendant potential for corrosion. Such ingress of soil water into the core of the cable would result in corrosive attack and damage to the conductors and changes in the mutual capacitance thereof. The presence of water (or moisture) within the cable core would also result in the inefficient, and in some cases failure of, operation of telephone circuits formed by the conductors.

In conventional plastic jacketed telephone cables, i.e., cables in which the outer jacket is a plastic material such as polyethylene, the jacket is not well adhered to the shielding tape of bare metal. Because of this deficiency, the outer plastic jacket is known to slip over the shielding tape and to bunch into shoulders as the cable is pulled through a duct or placed into a trench. Furthermore, the shielding tape may kink or rupture due to fatigue of the metal tape as a result of the bending stresses imposed during installation.

0024631

In order to improve the properties of a cable, a special adhesive copolymer may be applied to cover one or both sides of the metallic shielding tape. Such an adhesive layer is dislosed in U.S. Patent Nos. 3,233,063 3,795,540, and 4,125,739. The adhesive copolymer used for coating the tape contains reactive carboxyl groups which have the ability to develop firm adhesion to the tape and also to the overlying polyethylene jacket. A shielding tape, such as aluminum, which is protected by an adhesive copolymer is highly resistant to corrosion.

When a polyethylene jacket is extruded over the tape coated with the adhesive copolymer, the heat from the molten polyethylene bonds the coated tape to the jacket, forming a unitized sheath which combines the strength of the metal component with the elongation and fatigue resistance of the polyethylene component. Such cable construction is referred to in the art as a "bonded jacket" cable design. If the heat imparted to the polyethylene is sufficiently high, the shielding tape would become hot enough so that the overlapped portions of the tape bond together at the seam, thereby forming a tight tube or pipe around the core of the cable. The "bonded jacket" cable with a sealed seam has significantly improved resistance to moisture penetration into the cable core. The cable construction also has been shown to have high mechanical strength necessary to withstand repeated bending of the cable, i.e., kinking and fatigue failures of the shielding tape, resulting from bending stresses during installations. Further, the stresses induced by the temperature cycles under service conditions are reduced substantially.

As described hereinabove, a "bonded jacket" cable with a sealed seam has significantly improved corrosion resistance, mechanical properties and resistance to moisture penetration into the core. However, water (or moisture) ingress into the cable core has been a serious problem with the "Alpeth" tape cables buried directly in soil. Even the "bonded jacket" cable was susceptible to water ingress into the cable core, when the unitized sheath of the metal shielding tape and the outer polyethylene jacket is penetrated during or after installation or by lightning, insects, rodents, or frost, for example.

To solve the problem of water ingress into the cable core, several approaches have been suggested in addition to the use of "bonded jacket" cable design. In one such approach, the cable core is pressurized.

In a more universally accepted approach, the interstitial voids in the cable core is filled with a jelly-like water blocking material, such as blends of petrolatum and polyethylene, as disclosed in U.S. Patent Nos. 3,607,487; 3,733,225; 3,789,099; 3,832,215 and 3,888,710.

Although the filling of the cable core has virtually eliminated water ingress into the cable core, migration of water at the shielding tape-jacket and shielding tape-core interfaces has been reported when some of the "non-bonded jacket" cable designs were subjected to a test wherein a water head is applied to an opening in the outer plastic jacket. To solve this particular problem, the interfaces were flooded with a jelly-like water blocking material, commonly known in

**0024631**

the industry as "flooding compound", as taught in U.S. Patent No. 3,638,306. Although one jelly-like material is used to fill the cable core and to flood the core-shielding tape and shielding tape-jacket interfaces, typically, two different materials are used for each purpose - one material to fill the core, another to fill the interfaces.

There are some major disadvantages connected with the use of jelly-like materials about the shielding tape. Since these materials are applied hot, the materials will contract when the cable cools leaving some voids at the interfaces. When the outer plastic jacket is subsequently extruded over such materials, the low molecular weight fractions in the materials are absorbed into the jacket again creating voids. Such fractions may also attack the jacket material and thereby adversely affect the physical properties thereof. A more serious disadvantage manifests itself in problems associated with handling the cable containing such materials. More specifically, the outer jacket tends to slip over the shielding tape during handling operations because the materials used to flood the interfaces become less viscous after the cable is exposed to the sun.

If the shielding tape is bonded to the jacket, as in the bonded jacket cable design, the major disadvantages to the use of flooding compounds about the shielding tape can be eliminated. However, such a cable design has been found difficult to achieve. In practice, an extra amount of jelly-like water blocking material is applied over the core prior to the wrapping of a plastic coated shielding tape thereabout. The excess amount of water blocking material is needed to eliminate any potential water passage at the interface of the core and the shielding tape.

More particularly, the excess amount of water blocking material applied over the core has a tendency to exude over the outer coated shielding tape surface and come in contact with the jacket. The presence of the water blocking material at the overlapped area and the outer surface of the shielding tape interferes with bonding of the shielding tape to the jacket. The sealing of the overlapped portions of the shielding tape, thereby forming a tight tube, is also interfered with. Such difficulty presented the cable makers with what appears to be two mutually exclusive, not totally satisfactory, alternatives: a bonded jacket at the expense of a cable that is not fully filled or a fully filled cable at the expense of a bonded jacket. Furthermore, it has been discovered that the plastic coated shielding tape is needed to provide corrosion protection to the underlying metal even if the cable core is filled and the interfaces are flooded with jelly-like water blocking materials. Therefore, the plastic coated shielding tape could be bonded to the jacket if a way could be found to eliminate the filling or flooding compound from the outer surfaces of the tape and at the overlap.

A possible solution to the above-described problem is to use a water-swellable powder, in lieu of a flooding compound, at the interface of core and shield as disclosed in U.S. Patent No. 3,711,621. Such powder can also be used to fill the interstices between and around the core as disclosed in U.S. Patent Nos.

4,002,819 and 4,004,077. The water-swellable powder can also be used at the interface of the shielding tape and jacket of a non-bonded jacket cable design. A major disadvantage of water-swellable powder is that the powder cannot be expected to remain uniformly distributed about the core during handling, e.g., manufacture, storage or use. As the powder settles or shifts, an insufficient quantity may be available to form an effective water block at the site where water enters.

Accordingly, it is an object of this invention to provide an electrical cable having improved resistance to moisture ingress thereinto. A particular object of this invention is to provide a fully bonded jacket cable having a filled core and a water-block between the core and the shielding tape. Other objects and advantages of the invention will become apparent in the following description.

The invention more particularly resides in an electric cable comprising a core of at least one insulated conductor, at least one metallic shielding tape surrounding the core, and an outer jacket surrounding the shield, said cable having at least one interstice between the core and the jacket along which interstice water could migrate axially, circumferentially and longitudinally within the cable in the event of rupture of the outer jacket, characterized by an absorbent, polymeric film in the interstice wrapped about the core, said film comprising a cross-linkable aqueous solution of a polyelectrolyte and at least 0.1 percent by weight based on the polyelectrolyte of a cross-linking agent reactive with carboxylate groups, said film being swellable when wetted with water to fill the interstice thereby stopping the migration of water within the cable.

In one particular embodiment of this invention, the core of the cable is filled with a water blocking material such as a petroleum based, jelly-like filling compound or a water-swellable powder.

The absorbent polymeric film prevents the water blocking material from coming in contact with the shielding tape and at the same time prevents any water migration at the interface of core and shielding tape in the event the water enters into this interface due to rupture or penetration of the outer jacket. When a plastic coated metal shielding tape is used in conjunction with the absorbent film, a fully bonded cable having an effective water block at the core and shielding tape interface is realized.

The invention is further illustrated by reference to the accompanying drawings in which:

Figure 1 is a cut-away perspective view of an end of a communication cable with a plurality of insulated conductors in a core which is filled with a filling compound, a dielectric barrier, a water swellable film, a plastic coated aluminum shield and a plastic outer jacket.

Figure 2 is a cut-away perspective view of a cable with a plurality of insulated conductors in a core which is filled with a water swellable powder, a dielectric barrier, a water swellable film, a plastic coated steel armor and a plastic outer jacket.

Figure 3 is a cut-away perspective view of a coaxial cable having a center conductor, a foam insulation, an aluminum outer conductor, a plastic jacket, a water swellable film, a plastic coated steel armor, and an outer plastic jacket.

Figure 4 is a cut-away perspective view of another cable with a plurality of insulated conductors in a core which is filled with a filling compound, a dielectric barrier, a water swellable film, a plastic coated aluminum shield, and an outer plastic jacket.

Figure 5 is a cut-away perspective view of yet another cable with a plurality of insulated conductors in a core which is filled with water swellable powder, a dielectric barrier, a water swellable film, a plastic coated aluminum and an outer plastic jacket.

The following description also illustrates the manner in which the principles of the invention are applied but is not to be construed as limiting the scope of the invention.

The absorbent polymeric film useful in this invention is made from a cross-linkable aqueous solution comprising a polyelectrolyte and at least 0.1 percent by weight based on the polyelectrolyte of a cross-linking agent reactive with carboxylate groups and being swellable when wetted with water, as described in U.S Patent Nos. 4,076,673 and 4,117,184.

Preferred is a water-swellable aerated film, described in U.S. Patent No. 4,117,184, which film is

**0024631**

characterized by being rapidly wetted and swelled by water and which comprises a lightly cross-linked carboxylic polyelectrolyte having a density ranging from 0.3 to 1.1 grams per cubic centimeter and a water absorbency rate of not greater than 60 seconds.

Although the absorbent polymeric films can be used by themselves, they have a tendency to block and not unwind easily. Therefore, it is preferred that such absorbent films be laminated to suitable substrates, such as, woven fabrics, non-woven fiber mats, polymeric foams, tissue paper, or kraft paper as described in U.S Patent No. 4,117,184. Such laminates, in turn, could be adhered to a core wrap of polyester or polypropylene film and could be wrapped about the cable core as a core wrap.

This invention is useful in all cable designs well known in the art to block the ingress of water into such cables. However, this invention is particularly useful in bonded jacket cable designs using a plastic coated shielding tape such as described in U.S. Patent Nos. 3,233,036; 3,681,515 and 3,795,540. A most useful feature of this invention is embodied in a bonded jacket cable design having its core filled with a water-blocking material whereby a fully water proofed and bonded jacket cable is realized.

The shielding tapes (and armoring tapes) particularly useful for the cables of this invention may be formed from a metal strip having a thickness of from 0.2 to 25 mils, preferably, of from 2 to 15 mils. The metal strip may be formed from aluminum, aluminum alloys, alloy-clad aluminum, bronze, copper, steel, stainless steel, tern plated steel, copper-clad stainless steel, aluminum-clad low carbon steel, electrolytically chrome coated steel, tin plate steel, chrome treated steel, and the like. These metals may also be surface treated or have thereon surface conversion coatings. The shielding tapes are preferably coated with or laminated to a layer of an adhesive thermoplastic polymer composed of a copolymer of ethylene and from about 2 to 20 percent based on copolymer weight of an ethylenically unsaturated carboxylic acid.

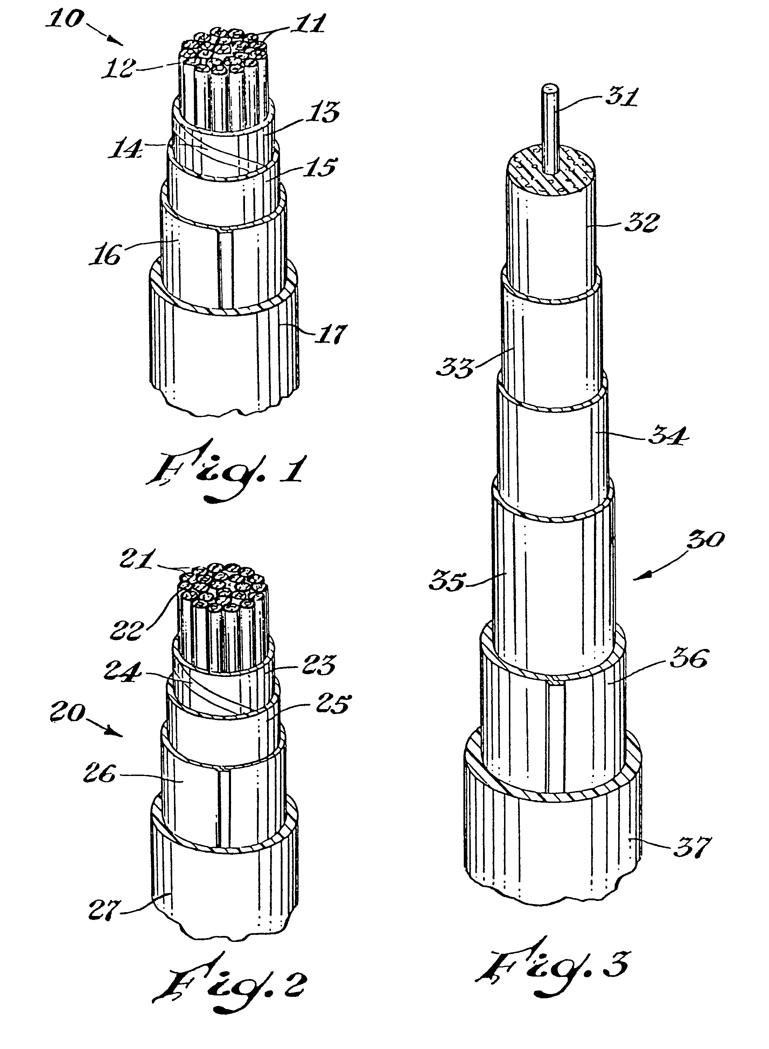

Referring to the drawings, Figure 1 represents a communications cable. The cable 10 includes an inner core of a plurality of pairs of insulated conductors 11 (e.g., plastic covered copper wires), filled with a filling compound (not shown), wrapped in a plastic dielectric barrier 13 which is securely bound with a binder tape 14. The dielectric barrier is wrapped with a water swellable film 15 which is enclosed in a plastic coated aluminum shielding tape 16. The shielding tape 16 is a longitudinally folded tube with a hermetically sealed overlapping seam. An outer jacket 17, preferably of polyethylene, is extruded over the shield 16 and is advantageously bonded to the same.

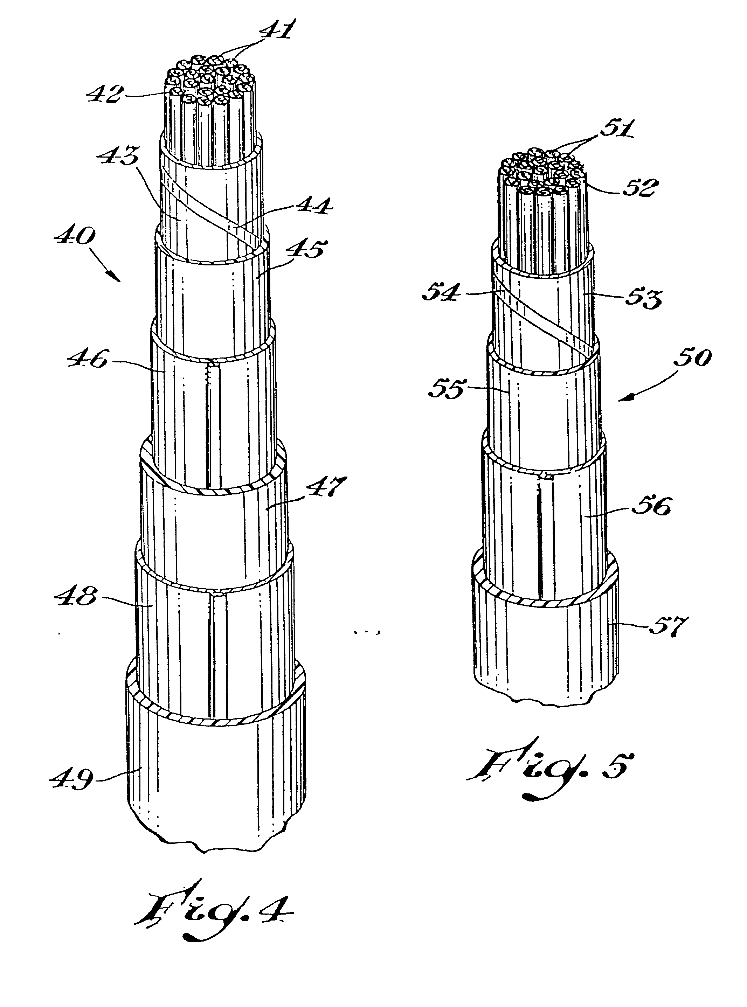

Figure 2 represents a buried distribution wire. The cable 20 includes an inner core of a plurality of pairs of insulated conductors 21, filled with a water swellable polymer powder (not shown), wrapped in a plastic dielectric barrier 23 which is securely bound with a binder tape 24. The dielectric barrier is wrapped with a water swellable film 25 which is enclosed in a plastic coated steel armor 26. The steel armor 26 is a longitudinally folded tube with a hermetically sealed overlapping seam. The steel armor 26 is advantageously corrugated transversely (not shown) to impart greater flexibility to the distribution wire. An outer jacket 27, preferably of chlorinated polyethylene, is extruded over the armor 26 and is advantageously bonded to the same.

In Figure 3, a coaxial cable 30 is shown wherein 31 is a conductor for power or telephone communications set in foam insulation 32 which is covered with an aluminum outer conductor 33. A plastic jacket 34 is extruded over the aluminum outer conductor 33. A water swellable film 35 is wrapped around the plastic jacket 34 which is enclosed in a plastic coated steel armor 36. The steel armor is a longitudinally folded tube with a hermetically sealed overlapping seam. The plastic coated steel armor 36 is advantageously corrugated transversely to impart greater flexibility to the coaxial cable. An outer plastic jacket 37 is extruded over the steel armor 36 and is advantageously bonded to the same.

Figure 4 represents another communications cable 40. In the inner core, pairs of insulated conductors, having their interstices filled with a filling compound (not shown), are wrapped in a plastic dielectric barrier 43 which is securely bound with a binder tape 44. The dielectric barrier is wrapped with a water swellable film 45 which is enclosed in a plastic coated aluminum shielding tape 46. The aluminum shielding tape 46 is wrapped in another water swellable film 47 which is enclosed in a plastic coated steel armor 48.

The aluminum shielding tape 46 and the steel armor 48 are advantageously corrugated transversely to impart greater flexibility to the communications cable 40. An outer plastic jacket 49 is extruded over the steel armor 48 and is advantageously bonded to the same. The aluminum shielding tape 46 is generally a longitudinally folded and corrugated tube without an overlapping seam. The plastic coated steel armor 48 is a longitudinally folded tube with a hermetically sealed overlapping seam.

In Figure 5, yet another communications cable 50 is shown which includes an inner core of a plurality of pairs of insulated conductors 51, having their interstices filled with a water swellable polymeric powder (not shown), wrapped in a plastic dielectric barrier 53 which is securely bound with a binder tape 54. The dielectric barrier is wrapped with a water swellable film 55 which is enclosed in a plastic coated aluminum shielding tape 56. The shielding tape is a longitudinally folded tube with a hermetically sealed overlapping seam. An outer plastic jacket 57 is extruded over the shielding tape 56 and is advantageously bonded to the same.

In addition to the particular cable designs illustrated above, the principles of the instant invention are equally applicable to other cable designs and variations thereof which are readily apparent to those skilled in the art.

In the specific working examples that follow, the parts and percentages are by weight unless otherwise specified.

27,521-F

## Example 1

Test samples of cable were produced on an experimental jacketing line. More specifically, a commercially produced filled core bundled in a core wrap of a polyester film was spirally wrapped with various absorbent films and enclosed in a shielding tape. Finally, an outer plastic jacket of polyethylene was extruded over the shield. The core consisted of 50 pairs of twisted, insulated conductors. The conductors were surrounded by and the interstitial spaces therebetween were filled with a water blocking filler of a blend of a polyethylene and petroleum jelly. The shielding tape consisted of an eight mil thick aluminum strip having adhered to both sides thereof a coating of ethylene and acrylic acid copolymer of about 2 mil thickness. The absorbent films were cut into strips of approximately 3 inches wide and spirally wound about the polyester core wrap of the filled core of about 6 feet in length. A 2 5/8 inch wide aluminum shielding tape was longitudinally wrapped about the absorbent film with an overlapped seam. The resultant assembly was coated with a polyethylene jacket having a thickness of about 60 mils using a conventional screw type extruder.

Some difficulty was encountered in trying to wrap the absorbent film around the core: moisture from the atmosphere caused severe "blocking" in the films but not sufficient to interfere with the preparation of the short samples. To improve the handling capability of the film, the film surface was dusted with talc powder or the film had been laminated on both sides with 10.5 pounds per 3000 $ft^2$ tissue paper. A control sample, without the absorbent film was made in a similar manner. The resultant samples were then cut into 3 feet sections and tested for their ability to block water in accordance with Rural Electrification Administration (REA) Specification PE-39, Paragraph 25.

The REA test requires no water leakage in the sheath interfaces, under the core wrap or between any insulated conductors in the core of a three-foot length of a cable held in a vertical position for one hour with a 3-foot water head over one end thereof.

Various absorbent films were produced in accordance with the methods described hereinbelow.

Sample No. 1

An absorbent composition was prepared as follows:

|  | Parts Dry Weight | Parts Wet Weight |
|---|---|---|
| Experimental Polymer XD-8587.01 (Aqueous solution of an acrylic copolymer described in U.S. 4,026,932) | 94.0 | 373.0 |
| Tween 20 (polyoxyethylene sorbitan monolaurate) | 5.0 | 5.0 |
| Polycup 172 (polyamide-polyamine epichlorohydrin adduct) | 1.0 | 24.0 |
| Deionized water (to 20% final solids) | -- | 98.0 |

The above ingredients are thoroughly mixed and cast by a reverse roll coater on a preheated, release coated (adhering tape) stainless steel belt. Sufficient wet film is cast to produce a dry film weight of 3.7 grams/ft$^2$.  The film passes through a hot air, circulating oven and a layer of 10.5 pounds/3000 ft$^2$ tissue is laminated to each side of the film by spraying moisture on the surface of the film to make it tacky enough to stick to the tissue.  The absorbent film/tissue laminate is wound on a 3 inch diameter pressed fiber core and slit to various widths if desired.

Sample No. 2

A composition similar to Sample No. 1 was made except the cross-linker (Polycup 172) was reduced from 1% to 0.6%.

|                   | Parts Dry Weight | Parts Wet Weight |
| ----------------- | ---------------- | ---------------- |
| XD-8587.01        | 94.4             | 374.6            |
| Tween 20          | 5.0              | 5.0              |
| Polycup 172       | 0.6              | 14.0             |
| Deionized Water   | -                | 106.0            |

The mixing, casting, drying, and laminating process was the same as described in Sample No. 1.

Sample No. 3

The composition is the same as Sample No. 1 except the laminate was perforated with 0.060 inch needles on 1/4 inch centers.

Sample No. 4

The composition is the same as Sample No. 2 except the laminate was perforated with 0.060 inch needles on 1/4 inch centers.

Sample No. 5

The composition is the same as Sample No. 1 except the film is only 2.6 grams/ft$^2$ and no tissue is laminated to the absorbent film.

Sample No. 6

The composition is the same as Sample No. 1 except it contained about 5% glycerine. The composition was placed in an applicator bath of a film casting unit. An applicator roll, running in the bath, applied the composition to a cold (not preheated) stainless steel belt containing an adherent release coating. The belt and absorbent composition was then heated in a hot air, circulating oven and the absorbent was dried and cured. The absorbent film was removed from the belt and wound on a two inch paperboard core. No laminate was made and the film was tested as a film.

The properties of these samples are shown in Table 1.

27,521-F

TABLE I

| Sample No. | Physical Form | Absorbent Film Weight (g/ft$^2$) | Absorbent Film Capacity (g/g)[1] | Absorbent Film Gel Strength (psi)[2] |
|---|---|---|---|---|
| 1 | Tissue Laminate | 3.7 | 40 | 1.1 |
| 2 | Tissue Laminate | 3.7 | 51 | 0.7 |
| 3* | Tissue Laminate | 3.7 | 40 | 1.1 |
| 4* | Tissue Laminate | 3.7 | 51 | 0.7 |
| 5 | Film | 2.6 | 38 | 1.7 |
| 6 | Film | 5.1 | 28 | 1.8 |

Notes for Table I:

\* Laminate was perforated.

(1) The amount in grams of 1% NaCl solution per gram of the film weight.

(2) The strength of the gel in pounds per square inch (psi) after a free standing piece of absorbent film has swelled to its maximum absorbent capacity in 1% NaCl solution.

Results of water penetration tests on cable samples are reported in Table II.

TABLE II

| Test No.(1) | LEAKAGE OUTSIDE CORE | | | | |
| | 1 Hr. | 2 Hrs. | 5 Hrs. | 16 Hrs. | 24 Hrs. |
|---|---|---|---|---|---|
| 1 | No | No | No | -- | No[3] |
| 2 | No | No | No | -- | No |
| 3 | No | No | -- | -- | No |
| 4 | No | No | No | -- | No |
| 5 | No | -- | -- | Yes | -- |
| 6 | Yes[2] | No | No[3] | -- | No[3] |
| 7* | Yes | -- | -- | -- | -- |

Notes:

    * = Not an example of this invention. Control without absorbent film around the core leaked immediately.

(1)    Test numbers correspond to their respective sample numbers.

(2)    Started to leak in 5 minutes, then stopped by the first hour.

(3)    Gel pushed out the end of the sheath.

In place of the particular absorbent films used to make up the water resistant cables in the preceding example, there can be used other absorbent films made from a cross-linkable aqueous solution comprising a polyelectrolyte and at least 0.1 percent by weight based on the polyelectrolyte of a difunctional cross-linking agent reactive with carboxylate groups as hereinbefore described with substantially similar results in imparting an effective water block to various cable designs.

In place of the tissue paper used as a substitute to laminate the absorbent films of this invention, non-woven fiber mats, polymeric foams, kraft paper and the like may also be used.

1. An electric cable comprising a core of at least one insulated conductor, at least one metallic shielding tape surrounding said core and an outer jacket surrounding said shielding tape, said cable having at least one interstice between said core and said jacket along which interstice water could migrate axially, circumferentially and longitudinally within said cable in the event of rupture of said outer jacket, characterized by an absorbent, polymeric film in said interstice wrapped about said core, said film comprising a cross-linkable aqueous solution of a polyelectrolyte and at least 0.1 percent by weight based on said polyelectrolyte of a cross-linking agent reactive with carboxylate groups, said film being swellable when wetted with water to fill said interstice thereby stopping the migration of water within said cable.

2. The cable of Claim 1 wherein said film is a water-swellable aerated film which is characterized by being rapidly wetted and swelled by water which comprises a lightly cross-linked carboxylic polyelectrolyte having a density ranging from 0.3 to 1.1 grams per cubic centimeter and a water absorbency rate of not greater than 60 seconds.

27,521-F

3. The cable of Claim 1 or 2 wherein said core is filled with a water blocking material.

4. The cable of Claim 3 wherein said water blocking material is a petroleum based, jelly-like filling compound or a water-swellable powder.

5. The cable of any one of the preceding claims wherein said metallic shielding tape is selected from aluminum, aluminum alloys, alloy-clad alluminum, copper, copper-clad-stainless steel, and aluminum-clad low carbon steel.

6. The cable of any one of the preceding claims wherein said metallic shielding tape has adhered to at least one side thereof at least one protective layer of a thermoplastic polymeric resinous material and is bonded to said outer jacket.

7. The cable of Claim 6 wherein said polymeric resinous material is a copolymer of ethylene and from 2 to 20 percent based on copolymer weight of an ethylenically unsaturated carboxylic acid.

8. The cable of any one of the preceding claims wherein an additional metallic shielding tape surrounds said shielding tape to provide additional mechanical protection to said core.

9. The cable of Claim 8 wherein said additional metallic shield is selected from aluminum alloys, alloy-clad aluminum, bronze, copper, steel, tin plate steel, electrolytically chrome coated steel, stainless steel, copper-clad stainless steel, chrome treated steel, and tern plated steel.

10. The cable of Claim 8 or 9 wherein said additional metallic shield has adhered to at least one side thereof at least one protective layer of a thermoplastic polymeric resinous material and is bonded to said outer jacket.

11. The cable of Claim 10 wherein said polymeric resinous material is a copolymer of ethylene and from 2 to 20 percent based on copolymer weight of an ethylenically unsaturated carboxylic acid.

12. The cable of Claim 11 wherein said shields are bonded together.

13. The cable of any one of the preceding claims wherein said metallic shielding tape is corrugated with corrugations that are substantially circumferential.

14. The cable of any one of the preceding claims wherein said water swellable film is adhered to a substrate.

15. The cable of Claim 14 wherein the substrate is woven fabrics, non-woven fiber mats, polymeric foams, tissue paper or kraft paper.

16. The cable of Claim 14 or 15 wherein the water-swellable film and the substrate are perforated.

*Fig. 1*

*Fig. 2*

*Fig. 3*

Fig. 4

Fig. 5

European Patent Office

**EUROPEAN SEARCH REPORT**

0024631

EP 80104773.9

| | DOCUMENTS CONSIDERED TO BE RELEVANT | | CLASSIFICATION OF THE APPLICATION (Int. Cl. 3) |
|---|---|---|---|
| Category | Citation of document with indication, where appropriate, of relevant passages | Relevant to claim | |
| | DE - B1 - 2 522 000 (SIEMENS)<br>* Totality *<br>-- | 1,6 | H 01 B 7/28<br>H 01 B 9/00<br>H 01 B 11/00 |
| | CH - A - 551 681 (GENERAL CABLE)<br>· * Column 2, line 61 - column 5, line 27; drawings *<br>-- | 1,3,5, 6,8,9, 13-15 | |
| D | US - A - 4 117 184 (DOW)<br>* Column 8, claim 1; column 4, line 67 - column 5, line 7 *<br>& DE-A- 2 725 736<br>& FR-A- 2 354 184<br>-- | 1,2,15 | |
| | DE - A - 2 263 191 (SIEMENS)<br>* Pages 4-6; drawing *<br>-- | 1,3-6 | **TECHNICAL FIELDS SEARCHED (Int.Cl. 3)**<br><br>H 01 B 7/00<br>H 01 B 9/00<br>H 01 B 11/00<br>H 01 B 13/00 |
| | DE - A1 - 2 514 569 (STANDARD ELECTRIC)<br>* Totality *<br>-- | 1,3,4, 14,15 | H 01 B 3/00<br>A 61 F 13/00<br>B 32 B 27/00<br>C 09 K 3/00 |
| A | GB - A - 1 089 376 (DOW)<br>* Page 4, lines 18-25; claim 1 *<br>-- | 7,11 | |
| A,D | US - A - 3 638 306 (BELL)<br>* Totality *<br>-- | 1,3-5, 8,9,13 | **CATEGORY OF CITED DOCUMENTS**<br><br>X: particularly relevant<br>A: technological background<br>O: non-written disclosure<br>P: intermediate document<br>T: theory or principle underlying the invention<br>E: conflicting application<br>D: document cited in the application<br>L: citation for other reasons |
| A | CH - A - 462 265 (GENERAL CABLE)<br>* Fig.5; claim *<br>-- | 5,6, 8-10 | &: member of the same patent family, corresponding document |

| X | The present search report has been drawn up for all claims | | |
|---|---|---|---|
| Place of search<br>VIENNA | Date of completion of the search<br>16-10-1980 | Examiner<br>KUTZELNIGG | |

EPO Form 1503.1   06.78

| | DOCUMENTS CONSIDERED TO BE RELEVANT | | CLASSIFICATION OF THE APPLICATION (Int. Cl.3) |
|---|---|---|---|
| Category | Citation of document with indication, where appropriate, of relevant passages | Relevant to claim | |
| A | <u>CH - A - 495 036</u> (GENERAL CABLE) <br> * Column 4, line 44 - column 6, line 9; fig. 1 * <br> -- | 5-9,12 | |
| A | <u>AT - B - 338 357</u> (HOECHST) <br> * Totality * <br> -- | 1,14,15 | |
| A | <u>DE - A - 2 158 996</u> (VEREINIGTE) <br> * Totality * <br> -- | 1,14,15 | |
| A | <u>US - A - 3 670 731</u> (JOHNSON & JOHNSON) <br> * Column 4, line 71 - column 5, line 39; fig. 1 * <br> ---- | 15,16 | TECHNICAL FIELDS SEARCHED (Int. Cl.3) |

EPO Form 1503.2 06.78